## Europäisches Patentamt

## European Patent Office

## Office européen des brevets

(19)

(11) Veröffentlichungsnummer : **0 360 904 B1**

(12) # EUROPÄISCHE PATENTSCHRIFT

(45) Veröffentlichungstag der Patentschrift :
24.08.94 Patentblatt 94/34

(51) Int. Cl.$^5$ : **H04L 25/03**

(21) Anmeldenummer : 88116124.4

(22) Anmeldetag : 29.09.88

(54) Schaltungsanordnung zum Entzerren von in analoger Form empfangener Digitalsignale.

(43) Veröffentlichungstag der Anmeldung :
04.04.90 Patentblatt 90/14

(45) Bekanntmachung des Hinweises auf die
Patenterteilung :
24.08.94 Patentblatt 94/34

(84) Benannte Vertragsstaaten :
AT BE CH DE FR GB IT LI NL SE

(56) Entgegenhaltungen :
US-A- 4 504 958

(56) Entgegenhaltungen :
1974 INTERNATIONAL ZURICH SEMINAR ON
DIGITAL COMMUNICATIONS, 12.-15. März
1974, Zurich, Seiten H7(1)-H7(7), IEEE, New
York, US; S. HORVATH Jr.: "Comparative performance of linear equalizers using a recursive sampled-data filter"
ARCHIV FÜR ELEKTRONIK UND
ÜBERTRAGUNGSTECHNIK, Band 38, Nr. 4,
Juli/August 1984, Seiten 239-248, Würzburg,
DE; S. HENTSCHKE: "Adaptive Kanalentzerrung für Uebernyquist- Baudraten"

(73) Patentinhaber : SIEMENS
AKTIENGESELLSCHAFT
Wittelsbacherplatz 2
D-80333 München (DE)

(72) Erfinder : Schenk, Heinrich, Dr. Ing.
Fatimastrasse 3
D-8000 München 71 (DE)

**Beschreibung**

Die Erfindung betrifft eine Schaltungsanordnung gemäß Oberbegriff des Patentanspruches 1. Derartige Schaltungsanordnungen sind bereits bekannt (z. B: NTG-Fachberichte 88, "Wege zum integrierten Kommunikationsnetz", Seiten 50 bis 57), um Digitalsignale, die durch ein analoges Übertragungsverfahren übertragen werden und dabei sowohl durch Vorschwinger nachfolgender Digitalsignale als auch durch Nachschwinger zuvor empfangener Digitalsignale verursachten Verzerrungen unterworfen sind, zu entzerren. Dabei treten insbesondere bei digitalen Teilnehmeranschlüssen im ISDN (Integrated Services Digital Network) starke lineare Verzerrungen auf, die durch entsprechende Entzerrungsmaßnahmen in Digitalsignal-Empfangseinrichtungen beseitigt werden müssen. Die durch Vorschwinger verursachten Verzerrungen sind im allgemeinen gering. Zur Entzerrung ist beispielsweise ein Transversalfilter mit zwei bis vier Fiterkoeffizienten ausreichend. Verzerrungen, die durch Nachschwinger verursacht sind, sind demgegenüber sehr groß. Sie lassen sich beispielsweise mit einem entscheidungsrückgekoppelten Entzerrer kompensieren. Die Anzahl der Entzerrerkoeffizienten liegt hier im Bereich von 20 bis 40. Bei höherwertigen Digitalsignalen, wie z. B. bei nach einem 2B1Q-Leitungscode codierten Digitalsignalen, können jedoch in derartigen Entzerrern bei starken Entzerrungen Konvergenz- und Stabilitätsprobleme auftreten.

Es ist nun Aufgabe der vorliegenden Erfindung, einen Weg zu zeigen, wie bei einer Schaltungsanordnung gemäß Oberbegriff des Patentanspruches 1 das Konvergenz- und Stabilitätsverhalten verbessert werden kann.

Gelöst wird die vorstehend aufgezeigte Aufgabe bei einer Schaltungsanordnung gemäß Oberbegriff des Patentanspruches 1 durch die im kennzeichnenden Teil dieses Patentanspruches angegebenen Merkmale. Die Erfindung bringt den Vorteil mit sich, daß mit Hilfe des Kompromiß-Entzerrers für aufeinanderfolgende Digitalsignale sowohl durch nachfolgende Digitalsignale hervorgerufene Vorschwinger-Verzerrungen als auch durch zuvor übertragene Digitalsignale hervorgerufene Nachschwinger-Verzerrungen reduziert sind, so daß das Konvergenz- und Stabilitätsverhalten der Entzerreranordnung verbessert ist.

Gemäß den Patentansprüchen 2 und 3 sind zwei hinsichtlich des schaltungstechnischen Aufwandes besonders günstige Ausführungsbeispiele für den Kompromiß-Entzerrer angegeben.

Für die Auslegung des Kompromiß-Entzerrers nach einem der beiden Ausführungsbeispiele hat es sich als zweckmäßig erwiesen, daß der festgelegte Faktor mit $A = 2^{-L}$ ausgewählt ist und L ganzzahlige Werte annimmt.

Im folgenden wird nun die vorliegende Erfindung anhand von Zeichnungen beispielsweise näher erläutert.

FIG 1 zeigt in einem Blockschaltbild eine digitale Teilnehmeranschluß-Einrichtung, bei der die Erfindung angewandt ist,

FIG 2 zeigt ein erstes Ausführungsbeispiel für einen Kompromiß-Entzerrer und

FIG 3 zeigt ein zweites Ausführungsbeispiel für einen Kompromiß-Entzerrer.

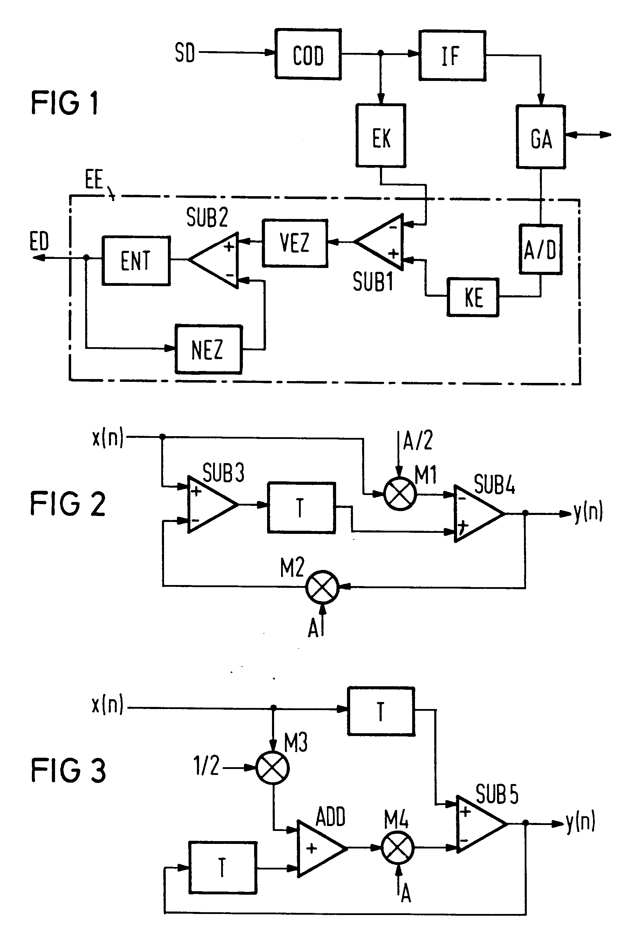

Die in FIG 1 dargestellte digitale Teilnehmeranschluß-Einrichtung möge beispielsweise für eine Duplex-Übertragung von Digitalsignalen über eine Zweidraht-Leitung im Gleichlage-Verfahren ausgelegt sein. Von einer solchen Teilnehmeranschluß-Einrichtung werden beispielsweise als Nachrichtensignale über die Zweidraht-Leitung zu übertragende Binärsignale SD zunächst mit Hilfe eines Codierers COD in mehrstufige Signale, beispielsweise in nach dem 2B1Q-Leitungscode codierte Digitalsignale, umgesetzt und nach einer Impulsformung in einem Impulsformer IF als analoge Signale über eine Gabelanordnung GA abgegeben.

Von der betreffenden Teilnehmeranschluß-Einrichtung über die Zweidraht-Leitung aufzunehmende analoge Signale durchlaufen zunächst die bereits erwähnte Gabelanordnung GA und gelangen anschließend zu der in FIG 1 dargestellten Digitalsignal-Empfangseinrichtung EE. Den Eingang dieser Empfangseinrichtung bildet ein Analog/Digital-Wandler A/D, der den ihm zugeführten Analogsignalen Abtastproben beispielsweise in einem einer Bitlänge der übertragenen Digitalsignale entsprechenden Abstand entnimmt und diese jeweils in eine Digitalsignal vorgegebener Bitanzahl umsetzt. Die dafür erforderlichen Abtasttaktimpulse werden von einem nicht dargestellten Taktgenerator bereitgestellt.

Die von dem Analog/Digital-Wandler bereitgestellten Digitalsignale durchlaufen zunächst einen Kompromiß-Entzerrer KE und werden anschließend nacheinander einem Subtrahierer SUB1 zugeführt, der gleichzeitig mit Kompensationssignalen von einem Echokompensator EK her beaufschlagt ist. Durch diese Kompensationssignale werden in den Digitalsignalen enthaltene Echosignalanteile kompensiert, die bei der zuvor beschriebenen Abgabe von Digitalsignalen in analoger Form über die Zweidraht-Leitung durch Reflektionen auf dieser Leitung bzw. durch eine nicht vollständige Entkopplung der Übertragungswege der Gabelanordnung den empfangenen analogen Signalen überlagert sind.

Die kompensierten Digitalsignale werden anschließend für eine weitere Verarbeitung gegebenenfalls über einen nicht dargestellten Regelverstärker an eine Entzerrer-Anordnung weitergeleitet, die die durch die elektrischen Eigenschaften der Zweidraht-Leitung bedingten, durch den Kompromiß-Entzerrer KE noch nicht beseitigten Verzerrungen der Digitalsignale weitgehend aufhebt. Die Entzerrer-Anordnung weist dabei beispielsweise einen Vorschwinger-Entzerrer VEZ auf, dessen Ausgangssignale einem Subtrahierer SUB2 zugeführt sind. Ein zweiter Eingang dieses Subtrahierers ist mit dem Ausgang eines Nachschwinger-Entzerrers NEZ verbunden. Eingangsseitig ist dieser Entzerrer an dem Ausgang eines Entscheiders ENT angeschlossen, der dem Subtrahierer SUB2 nachgeschaltet ist. Die am Ausgang dieses Entscheiders auftretenden entzerrten Digitalsignale ED werden anschließend weiteren, in FIG 1 nicht dargestellten Einrichtungen für eine weitere Auswertung zugeführt.

Im folgenden wird lediglich auf den Kompromiß-Entzerrer KE näher eingegangen, da die Wirkungsweise der anderen Schaltungsteile der in FIG 1 dargestellten Teilnehmeranschluß-Einrichtung bereits hinlänglich bekannt ist.

Der erwähnte Kompromiß-Entzerrer ist als Filter erster Ordnung mit einer Übertragungsfunktion in der Form

$$H(z) = \frac{-\frac{A}{2} + Z^{-1}}{1 + A Z^{-1}} \quad (1)$$

ausgebildet. Diese Übertragungsfunktion wird von Schaltungsanordnungen erfüllt, die zu vorgegebenen Abtastzeitpunkten von dem Analog/Digital-Wandler A/D her bereitgestellte Abtastwerte x(n) mit n = 1, ..., p, nach den Gleichungen

$$y(n) = x(n-1) - Ay(n-1) - \frac{A}{2}x(n) \quad (2)$$

oder

$$y(n) = -A(y(n-1) + \frac{1}{2}x(n)) + x(n-1) \quad (3)$$

entzerren. Dabei bedeuten y(n) und y(n-1) zu den Zeitpunkten n und n-1 am Ausgang des Kompromiß-Entzerrers auftretende Digitalsignale, x(n-1) einen Abtastwert zum Zeitpunkt n-1 und A eine festgelegte Konstante.

In FIG 2 ist ein Kompromiß-Entzerrer gemäß Gleichung (2) angegeben. Danach weist dieser eingangsseitig einen Subtrahierer SUB3 auf, dessen einem Eingang (+) die Abtastwerte x (n) zugeführt sind. Diese Abtastwerte werden außerdem an einen Multiplizierer M1 weitergeleitet, der zusätzlich mit einer festgelegten Konstanten $\frac{A}{2}$ beaufschlagt ist. Ausgangsseitig steht dieser Multiplizierer mit einem Eingang (-) eines Subtrahierers SUB4 in Verbindung, an dessen Ausgang ein den Abtastwerten x(n) jeweils zugeordnetes entzerrtes Ausgangssignal y(n) auftritt.

Das jeweilige Ausgangssignal y(n) ist zusätzlich einem mit einem festgelegten Faktor A beaufschlagten Multiplizierer M2 als Eingangssignal zugeführt. Ausgangsseitig steht dieser Multiplizierer mit einem zweiten Eingang (-) des bereits genannten Subtrahierers SUB3 in Verbindung. Das Ausgangssignal dieses Subtrahierers ist über ein Verzögerungsglied T einem zweiten Eingang (+) des Subtrahierers SUB4 zugeführt. Das Verzögerungsglied bewirkt dabei eine Signalverzögerung, die dem Abstand zweier aufeinanderfolgender Abtastwerte entspricht.

In FIG 3 ist ein nach Gleichung (3) ausgebildeter Kompromiß-Entzerrer dargestellt. Die diesem von dem Analog/Digital-Wandler A/D her zugeführten Abtastwerte x(n) werden über ein Verzögerungsglied T an einen Eingang (+) eines Subtrahierers SUB5 weitergeleitet, an dessen Ausgang ein den Abtastwerten x(n) jeweils zugeordnetes entzerrtes Ausgangssignal y(n) auftritt. Das Verzögerungsglied bewirkt dabei eine Verzögerung des jeweiligen Abtastwertes, die dem zeitlichen Abstand zweier aufeinanderfolgender Abtastwerte entspricht.

Der jeweilige Abtastwert x(n) wird zusätzlich einem Multiplizierer M3 zugeführt, der eingangsseitig außerdem mit einer festgelegten Konstanten mit dem Wert $\frac{1}{2}$ beaufschlagt ist und ausgangsseitig an einen Eingang eines Addierers ADD angeschlossen ist. Ein zweiter Eingang dieses Addierers steht über ein weiteres Verzögerungsglied T mit dem Ausgang des bereits genannten Subtrahierers SUB5 in Verbindung. Auch dieses Verzögerungsglied bewirkt eine Signalverzögerung, die dem zeitlichen Abstand zweier aufeinanderfolgender Abtastwerte entspricht.

Das Ausgangssignal des Addierers ADD ist einem Multiplizierer M4 zugeführt, der dieses mit einer festgelegten Konstante A multipliziert und das daraus resultierende Produktsignal an einen weiteren Eingang (-) des Subtrahierers SUB5 weiterleitet.

Für die in den Figuren 2 und 3 dargestellten Kompromiß-Entzerrer hat es sich als zweckmäßig erwiesen, daß die festgelegte Konstante mit A = $2^{-L}$ gewählt ist und L ganzzahlige Werte annimmt.

Abschließend sei noch darauf hingewiesen, daß anhand der Figuren 2 und 3 zwei Ausführungsbeispiele für einen Kompromiß-Entzerrer beschrieben worden sind, welcher eine Entzerrung von ihm zugeführten Abtastwerten entsprechend der oben angegebenen Übertragungsfunktion (1) durchführt. Darüber hinaus kann jedoch der Kompromiß-Entzerrer gemäß der vorliegenden Erfindung auch einen gegenüber den Figuren 2 und 3 abweichenden Aufbau aufweisen. So ist es beispielsweise möglich, daß dieser Kompromiß-Entzerrer auch unter Verwendung eines Signalprozessors realisiert ist. Außerdem kann der Kompromiß-Entzerrer auch abweichend von FIG 1 direkt dem Vorschwinger-Entzerrer vorgeschaltet sein.

**Patentansprüche**

1. Schaltungsanordnung für eine Digitalsignal-Empfangseinrichtung (EE) zum Entzerren von in analoger Form empfangener und über einen Analog/Digital-Wandler (A/D) geleiteter Digitalsignale,die jeweils durch Vor- und Nachschwinger zuvor übertragener bzw. nachfolgender Digitalsignale verzerrt sind, mit einem Vorschwinger-Entzerrer (VEZ) und einem mit diesem verbundenen Nachschwinger-Entzerrer (NEZ), **dadurch gekennzeichnet,** daß dem Vorschwinger-Entzerrer (VEZ) ein Kompromiß-Entzerrer (KE) vorgeschaltet ist, welcher für jedes übertragene Digitalsignal einen Abtastwert zugeführt erhält und als Filter erster Ordnung mit einer Übertragungsfunktion

$$H(z) \;=\; \frac{-\dfrac{A}{2} + Z^{-1}}{1 + A\,Z^{-1}}$$

ausgebildet ist.

2. Schaltungsanordnung nach Anspruch 1, **dadurch gekennzeichnet,** daß der Kompromiß-Entzerrer (KE) für einen zum Zeitpunkt n auftretenden Abtastwert x(n) ein Ausgangssignal y(n) in der Form

$$y(n) \;=\; x(n-1) - Ay(n-1) - \frac{A}{2}\,x(n)$$

abgibt, wobei x(n-1) einen Abtastwert zu einem Zeitpunkt n - 1, y(n-1) ein Ausgangssignal zum Zeitpunkt n-1 und A eine festgelegte Konstante darstellen.

3. Schaltungsanordnung nach Anspruch 1, **dadurch gekennzeichnet,** daß der Kompromiß-Entzerrer (KE) für einen zu einem Zeitpunkt n auftretenden Abtastwert x(n) ein Ausgangssignal y(n) in der Form

$$y(n) \;=\; -A\!\left(y(n-1) + \frac{1}{2}\,x(n)\right) + x(n-1)$$

abgibt, wobei x(n-1) einen Abtastwert zum Zeitpunkt n-1, y(n-1) ein Ausgangssignal zum Zeitpunkt n - 1 und A eine festgelegte Konstante darstellen.

4. Schaltungsanordnung nach einem der Ansprüche 2 und 3, **dadurch gekennzeichnet,** daß die festgelegte Konstante mit A = $2^{-L}$ gewählt ist und L ganzzahlige Werte annimmt.

## Claims

1. Circuit arrangement for a digital signal receiving device (EE) for equalizing digital signals received in analog form and conducted via an analog/digital converter (A/D), which signals are in each case distorted by pre-pulse and post-pulse ringing of previously transmitted and subsequent digital signals, with a pre-pulse ringing equalizer (VEZ) and a post-pulse ringing equalizer (NEZ) connected thereto, characterized in that the pre-pulse ringing equalizer (VEZ) is preceded by a compromise equalizer (KE) which is supplied with a sample for each transmitted digital signal and is constructed as first-order filter with a transfer function

$$H(z) \;=\; \frac{-\dfrac{A}{2} + Z^{-1}}{1 + A\,Z^{-1}}$$

2. Circuit arrangement according to Claim 1, characterized in that the compromise equalizer (KE) outputs an output signal y(n) in the form

$$y(n) \;=\; x(n-1) - Ay(n-1) - \frac{A}{2}x(n)$$

for a sample x(n) occurring at time n, x(n-1) representing a sample at time n-1, y(n-1) representing an output signal at time n-1 and A representing a fixed constant.

3. Circuit arrangement according to Claim 1, characterized in that the compromise equalizer (KE) outputs an output signal y(n) in the form

$$y(n) \;=\; -A\!\left(y(n-1) + \frac{1}{2}x(n)\right) + x(n-1)$$

for a sample x(n) occurring at a time n, x(n-1) representing a sample at time n-1, y(n-1) representing an output signal at time n-1 and A representing a fixed constant.

4. Circuit arrangement according to one of Claims 2 and 3, characterized in that the fixed constant is selected to be A=$2^{-L}$, and L assumes integral values.

## Revendications

1. Montage pour un dispositif (EE) récepteur de signaux numériques, destiné à égaliser les signaux reçus sous forme analogique et obtenus par l'intermédiaire d'un convertisseur analogique/numérique (A/D), qui sont distordus respectivement par des préaccentuateurs et des postaccentuateurs de signaux numériques transmis auparavant ou suivants, le montage comportant un égalisateur (VEZ) préaccentuateur et un égalisateur (NEZ) postaccentuateur relié à celui-ci, caractérisé en ce qu'un égalisateur (KE) de compromis est monté en amont de l'égalisateur (VEZ) préaccentuateur et reçoit, pour chaque signal numérique transmis, une valeur d'échantillonnage et est conçu en tant que filtre du premier ordre avec une fonction de transmission

$$H(z) \;=\; \frac{-A/2 + Z^{-1}}{1 + A\,Z^{-1}}$$

2. Montage selon la revendication 1, caractérisé en ce que l'égalisateur (KE) de compromis fournit, pour une valeur x(n) d'échantillonnage apparaissant à l'instant n, un signal y(n) de sortie ayant la forme

$$y(n) = x(n - 1) - Ay(n - 1) - A/2x(n)$$

où x(n-1) représente une valeur d'échantillonnage à un instant n - 1, y(n-1) un signal de sortie à un instant n-1 et A une constante fixée.

3. Montage selon la revendication 1, caractérisé en ce que l'égalisateur (KE) de compromis fournit, pour une valeur x(n) d'échantillonnage apparaissant à l'instant n, un signal y(n) de sortie ayant la forme

$$y(n) = - A(y(n - 1) + 1/2 \, x \, (n)) + x(n - 1)$$

où x(n-1) représente une valeur d'échantillonnage à l'instant n-1, y(n-1) un signal de sortie à l'instant n - 1 et A une constante fixée.

4. Montage selon l'une des revendications 2 et 3, caractérisé en ce que la constante fixée est choisie égale à $A = 2^{-L}$ et L prend des valeurs entières.

## FIG 1

SD → COD → IF

COD → EK

IF → GA →

EE

ED ← ENT ←(SUB2 +/−)← VEZ ←(SUB1 −/+)

EK → SUB1

GA → A/D

A/D → SUB1

KE → SUB1

ENT → NEZ

NEZ → SUB2

## FIG 2

x(n) →

SUB3 (+/−) → T → M1 → SUB4 (−/+) → y(n)

A/2 → M1

M2 → SUB3

A → M2

## FIG 3

x(n) → T → SUB5 (+/−) → y(n)

M3

1/2 → M3

ADD (+/+) → M4 → SUB5

T → ADD

A → M4